# EUROPÄISCHE PATENTANMELDUNG

(11) **EP 1 918 704 A2**
(43) Veröffentlichungstag der Anmeldung: **07.05.2008**
(21) Anmeldenummer: 07020778.2
(22) Anmeldetag: 24.10.2007
(51) Int. Cl.: G01N 30/12

(54) **Luftspürsimulator für chemische Messsysteme**

(30) Priorität: 03.11.2006 DE 102006052275
(71) Anmelder: Rheinmetall Landsysteme GmbH, 24107 Kiel (DE)
(72) Erfinder: Günther, Normann, 34132 Kassel (DE)
(74) Vertreter: Dietrich, Barbara

(57) **Zusammenfassung**

Vorgeschlagen wird, anstelle von Softwareprogrammen echte chemische Proben (Kampfstoffe = Chemikalien) (11,12,13) in einem Tubus (4) zu verwenden und diese als chemisch verseuchten Luftproben mit Hilfe eines Schwenkarmes (8) einem Messgerät (10) im Simulator (100) zuzuführen, wobei das Messgerät (10) an der Hülle des Simulators (100) so angebracht ist, dass ein Bediener nicht sehen kann, ob und welche Chemikalien (11,12,13) dem Messgerät (10) zugeführt werden, so dass die Illusion eines Kampfstoffes in der Luft entsteht. Die Messanordnung (10) besteht aus einem heizbaren Sondenkopf (1) und einem dahinter befindlichen Spektrometer (2), welches mit einem Rechner (3) elektrisch verbunden ist.

## Beschreibung

Bekannt sind Spürfahrzeuge für das Aufspüren von nuklear, biologisch und / oder chemisch kontaminierter Luft oder Boden. Diese Spezialfahrzeuge werden von speziell ausgebildeten Personen bedient. Ein mit dem Namen "Fuchs" bekannter Spürpanzer ist der Internetseite http://www.beepworld.de/members18/saschawolf/abc-fuchs.htm entnehmbar. Die gesammelten Messproben (Luftsammler) der kontaminierten Luft werden mittels eines Bedienerarmes einem Messgerät zugeführt. Radtrommeln gehören zum Rad-/Punktspürsimulator am Fahrzeug und dienen vorrangig dazu, kontaminierten Boden aufzunehmen und einem Messgerät zuzuführen.

Die Ausbildung insbesondere für Soldaten findet in der Regel an einem Simulator statt. Entsprechend werden diverse Szenarien am Simulator simuliert und die Auswertung trainiert. Ein Trainer "Fuchs" wird auf http://www.deutschesheer.de/portal/a/heer/kcxml/04 Sj9SPykssy0xPLMnMz0vM0Y QjzKLd 4838zAESYGZ7iH6kRhi5gixlH1vfV-P NxU QD9gtzQiHJHR0UAHCg80Q!!/delta/base64xml/ L2dJQSEvUUt3QS80SVVFLzZfR182Vko!?vw contentURL=/C1256F870054206E/W26FB8B 4284INFODE/content.jsp erwähnt. Mittels Software werden die notwendigen Daten eingespielt. Der Luftspürsimulator ist in der Lage, durch ein Simulationsprogramm gesteuert einem Messgerät unechte Chemikalien so zuzuführen, dass der Eindruck einer gemessenen Chemikalie in der Luft entsteht.

Aus der DE 10 2004 058 378 A1 ist eine Vorrichtung zur Zuführung von Flüssigkeiten an Analysegeräte für gas- und dampfförmige Stoffe offenbart. Dies erfolgt mit Hilfe einer porösen Keramik mit definierter Porenverteilung. Dadurch wird es möglich, eine Flüssigkeit über einen längeren Zeitraum konstant einer Heizfläche eines Analysegerätes zuzuführen. Durch Vibration der Stirnfläche, der Porendichte und -größe bzw. der anliegenden Temperatur kann die Gas- oder Dampfmenge bestimmt werden, die dem Gerät zugeführt wird. Die Keramik befindet sich in wenigstens einer Kartusche, die mittels eines Aktors axial nach oben bewegt werden kann, wobei die Verschlussklappe über eine Rampe verfahren wird und die Stirnfläche der Keramik gegen die Heizfläche verfährt.

Hier stellt sich die Erfindung die Aufgabe, eine Messvorrichtung für ein Simulationsgerät zu schaffen, mit dem insbesondere chemisch verseuchte Luftproben dem Simulator zugeführt werden können.

Der Erfindung liegt die Idee zugrunde, anstelle von Softwareprogrammen echte chemische Proben (Kampfstoffe = Chemikalien) zu verwenden und diese als chemisch verseuchten Luftproben mit Hilfe eines Schwenkarmes einem Messgerät im Simulator zuzuführen, wobei das Messgerät an der Hülle des Simulators so angebracht ist, dass der Bediener nicht sehen kann, ob und welche Chemikalien dem Messgerät zugeführt werden, so dass die Illusion eines Kampfstoffes in der Luft entsteht.

Der Schwenkarm fährt einen Tubus vor die Einlassöffnung des im Simulator integrierten chemischen Messgerätes. Innerhalb des Tubus befinden sich verschiedene Röhrchen, gefüllt mit den Chemikalien, welche einzeln gesteuert an die Einlassöffnung des chemischen Messgerätes gefahren werden. Diese Röhrchen beinhalten einen Keramikstab, welcher der geheizten Einlassöffnung permanent Chemikalien in flüssiger Form zuführt, die dann verdampft als Gas = Luftkampfstoff gemessen werden. D.h., die Chemikalie verdampft auf dem beheizten Sondenkopf. Dieser Dampf wird in der Sonde aufgefangen und auf bzw. an ein Massenspektrometer (AT 397 891 B) oder Gaschromatographen (AT 282 559) oder Kombinationen davon (WO 2004/097398 A1), gegeben. Die gemessenen Werte werden dann mit Vergleichswerten verglichen und die Chemikalie namentlich bestimmt.

Der Transport der Chemikalie erfolgt mittels eines Keramikstabes als Transportmedium. Dieser Keramikstab befindet sich bevorzugt in einer Kartusche oder Röhrchen mit Flüssigkeitsreservoir. Vorzugsweise drei dieser Kartuschen, die mit unterschiedlichen Chemikalien befüllt sind, befinden sich in einem Tubus der vor dem Sondenkopf positioniert ist. Die Kartuschen sind in diesem Tubus so gelagert, dass sie sich einzeln gesteuert vorfahren lassen und so in Kontakt mit dem Sondenkopf kommen. Hierdurch wird die Simulation verschiedener Kampfstoffe möglich.

Der Tubus ist so konzipiert, dass er möglichst wenig Wärme aufnimmt und die jeweils nicht genutzte Kartusche beispielsweise durch einen Schiebedeckel so abschirmt, dass eine Kreuzkontamination durch diese ausgeschlossen wird. Eine Chemikalienvermischung wird dadurch ausgeschlossen, dass die Zeitdifferenz zwischen den einzelnen Messungen so groß gewählt ist, dass bis zur neuen Zuführung die alten Restchemikalien verdampft sind.

Der Tubus befindet sich auf einem schwenkbaren Arm, welcher ein schnelles Vor- und Zurückschwenken ermöglicht. Dies wird befürwortet, wenn der Sondenkopf des chemischen Messgerätes für andere Messungen aus und eingefahren werden muss und in einem solchen fall der Tubus innerhalb von Sekundenbruchteile wegfahren muss, um die Illusion des "Freien Spürens" mit dem chemischen Messgerät im Simulator zu erhalten.

Mit dieser Messvorrichtung wird eine realistische Messung nachgestaltet, simuliert. Das dabei gelieferte Erscheinungsbild einer "wirklichen" Chemikalie spiegelt das Verhalten des Messgerätes beim Messen einer wirklichen Chemikalie im Einsatz wesentlich besser wieder, als es bei einer elektronischen Simulation (Abklingzeiten, Verschmutzungen, stets gleiches Erscheinungsbild der Anzeige der Substanz) möglich ist. Es können echte Chemikalien in unterschiedlichen Zusammensetzungen dem Messgerät zugeführt werden.

Ein weiterer Vorteil dieser Messanordnung ergibt sich dadurch, dass eine definierte Zuführung von Chemikalien unter echten Vorort-Messbedingungen geschaffen wird.

In Weiterführung wird bei der Simulation der Realität kann durch den Simulator auch ein kontaminierter Boden (beispielsweise Karte) simuliert werden. Dies kann manuell oder automatisch erfolgen. Die unterschiedlichen Kontaminierungen werden beispielsweise durch Farben dargestellt. Entsprechend der Farbdetektion wird dann ein Signal ausgelöst und entsprechend der Kartenvorgabe die dahinter verborgene Chemikalie der Messanordnung zugeführt. Es versteht sich, dass die Karte virtuell anzeigbar ist.

Die Messanordnung bedarf des Weiteren einer hohen Genauigkeit bei der Zuführung der Chemikalien vor das Messgerät, um falsche Auswertungen zu vermeiden. In der Realität übernimmt diese Funktion bekanntlich ein Bedienerarm. Daher ist in Weiterführung der Erfindung vorgesehen, dass, damit die Keramikflächen der Behälter an der Membran des Sondenrohres anliegen können, die Zuführeinheit zur Sonde ausgerichtet wird. Es hat sich als praxisnah bewiesen, wenn der Gelenkarm vorzugsweise an sieben Achsen verstellbar ist.

Anhand eines Ausführungsbeispiels mit Zeichnung soll die Erfindung näher erläutert werden. Es zeigt:
- Fig. 1: einen prinzipielle Aufbau der Messanordnung,
- Fig. 2: eine Zuführeinheit für die Proben zum Sondenkopf aus Fig. 1,
- Fig. 3: eine Kartusche aus der Zuführeinheit aus Fig. 2.

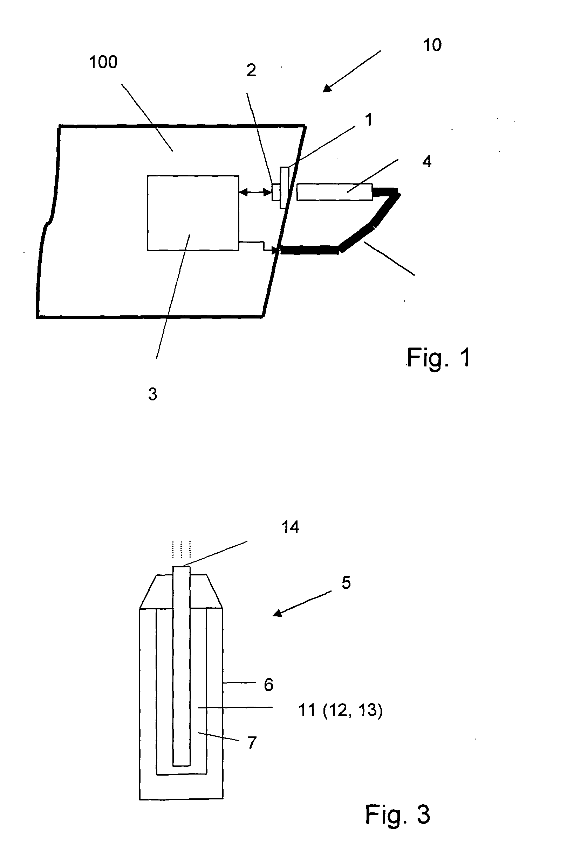

Fig. 1 zeigt einen allgemeinen Aufbau einer Messanordnung 10 eines Simulationsgerätes 100 dargestellt. Dieser ist so am Simulationsgerät 100 angebracht, dass ein nicht näher dargestellter Bediener des Simulationsgerätes 100 sie nicht sehen kann.

Die Messanordnung 10 besteht aus einem heizbaren Sondenkopf 1 bzw. einer Sonde und einem dahinter befindlichen Spektrometer 2, welcher mit einem Rechner 3 oder dergleichen elektrisch verbunden ist. Mit 4 ist ein Tubus gekennzeichnet, der dem Sondenkopf 1 direkt zugeführt wird (Zuführeinheit). Dieser Tubus 4 ist an einem in vorzugsweise sieben Achsen richtbaren Gelenkarm 8 befestigt, welcher seinerseits am Gehäuse des Simulationsgerätes 100 angebracht ist.

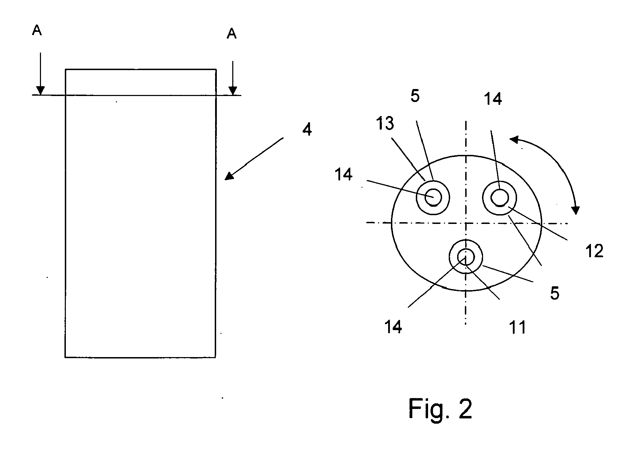

Im Tubus (Fig. 2) befinden sich vorzugsweise drei Kartuschen 5, die bevorzugt revolverartig um einen Mittelpunkt M des Tubus 4 angebracht sind.

Die Kartuschen 5 umfassen, wie in Fig. 3 dargestellt, ein Gehäuse 6 mit einem Flüssigkeitsreservoir 7, in dem verschiedene Chemikalien 11, 12, 13 (Fig. 2) eingebracht sein können. Innen liegend befindet sich ein Zuführstab 14, der bevorzugt aus poröser Keramik besteht.

### Das Simulationsverfahren läuft in etwa wie folgt ab:

Dem Bediener des Simulationsgerätes 100 wird in der Regel ein in den Fig. nicht näher dargestelltes kontaminiertes Gebiet / Boden (visuelle Karte) angezeigt (simuliert oder auch graphisch real dargestellt). Dieses Gebiet kann farblich oder andersartig kodiert sein, wobei unterschiedliche Kontaminierungen dann beispielsweise in unterschiedlichen Farben angezeigt werden. Entsprechend eine manuellen oder automatischen Farberkennung wird dann die damit kodierte Chemikalie 11, 12 oder 13 dem Sondenkopf 1 zugeführt. Diese Zuführung erfolgt über den Gelenkarm 8.

Über den Zuführstab 14 wird nun kontinuierlich die Zuführung der Chemikalie 11 (12, 13) an den Sondenkopf 1 vorgenommen. Durch eine vorzugsweise im Sondenkopf 1 befindliche, heizbare Membran oder dergleichen (nicht näher dargestellt) verdampft die Chemikalie 11 (12, 13). Dieser Dampf wird vom Sondenkopf 1 aufgefangen und dann durch das Spektrometer 2 gemessen. Die Werte werden danach an den Rechner 3 gegeben, in dem die Charakteristika der zumindest wichtigsten Kampfstoffe hinterlegt sind. Über diesen erfolgt dann im Zusammenspiel mit dem Bediener eine Auswertung und Bestimmung der Chemikalie 11 (12, 13).

Bei der Nutzung einer porösen Keramik als Zuführstab 14 ergibt sich der Vorteil, dass neben einer genauen Messung auch Chemikalien 11, 12, 13 ermittelt werden können, die einen hohen Siedepunkt besitzen. Der Zuführstab kann aber auch aus Glas mit Kapillaren oder aus Keramikplättchen mit Docht bestehen.

## Patentansprüche

1. Simulator (100) das Aufspüren von nuklear, biologisch und / oder chemisch kontaminierter Luft oder Boden, wobei
- der Simulator (100) eine Messanordnung (10) aufweist,
- bestehend aus einem Sondenkopf (1), einem Spektrometer (2) oder dergleichen und einem Rechner (3), und
- dem Sondenkopf (1) echte Chemikalien (11, 12, 13) als Proben zugeführt werden.

2. Simulator nach Anspruch 1, **dadurch gekennzeichnet, dass** die Chemikalien (11, 12, 13) in Kartuschen (5) mit einem Flüssigkeitsreservoir (7) eingebunden sind.

3. Simulator nach Anspruch 1 oder 2, **dadurch gekennzeichnet, dass** sich mehrere Kartuschen (5) in einem Tubus (4) untergebracht sind.

4. Simulator nach Anspruch 3, **dadurch gekennzeichnet, dass** der Tubus (4) an einem Gelenkarm (8) angebracht ist, der zum Sondenkopf (1) verstellt werden kann.

5. Simulator nach einem der Ansprüche 1 bis 4, **dadurch gekennzeichnet, dass** ein Zuführstab (14) in der Kartusche (5) vorhanden ist, welcher mit der Chemikalie (11, 12, 13) in Verbindung steht.

6. Simulator nach Anspruch 5, **dadurch gekennzeichnet, dass** der Zuführstab (14) aus einer porösen Keramik, einem Glas mit Kapillaren oder aus Keramikplättchen mit Docht bestehen.

7. Verfahren zur Simulation von nuklear, biologisch und / oder chemisch kontaminierter Luft oder Boden, wobei einem Bediener eines Simulationsgerätes (100) ein kontaminiertes Gebiet / Boden (visuelle Karte) angezeigt und entsprechend eine manuellen oder automatischen Erkennung dann die damit kodierte Chemikalie (11, 12, 13) dem Simulationsgerät (100) zugeführt wird.

8. Verfahren nach Anspruch 7, **dadurch gekennzeichnet, dass** das kontaminierte Gebiet simuliert oder auch graphisch real dargestellt werden kann.

9. Verfahren nach Anspruch 8, **dadurch gekennzeichnet, dass** dieses Gebiet farblich oder andersartig kodiert ist.

10. Verfahren nach einem der Ansprüche 7 bis 9, **dadurch gekennzeichnet, dass** über einen Zuführstab (14) eine kontinuierlich die Zuführung der Chemikalie 11 (12, 13) an einen Sondenkopf (1) des Simulators (100) erfolgt, wobei durch ein heizbares Mittel das Verdampfen der Chemikalie 11 (12, 13) bewirkt, der Dampf wird vom Sondenkopf (1) aufgefangen und dann durch ein Spektrometer 2 gemessen wird, und die Werte danach an einen Rechner (3) zur Auswertung gegeben werden.

11. Verfahren nach Anspruch 10, **dadurch gekennzeichnet, dass** im Rechner (3) die Charakteristika der zumindest wichtigsten Kampfstoffe hinterlegt sind.
